(19) Europäisches Patentamt
European Patent Office
Office européen des brevets

(11) **EP 2 116 584 B1**

(12) **EUROPÄISCHE PATENTSCHRIFT**

(45) Veröffentlichungstag und Bekanntmachung des Hinweises auf die Patenterteilung:
**01.12.2010 Patentblatt 2010/48**

(51) Int Cl.:
***C09J 133/00*** (2006.01)

(21) Anmeldenummer: **09158440.9**

(22) Anmeldetag: **22.04.2009**

(54) **Haftklebebänder zur Verklebung von Druckplatten**

Adhesive bands for bonding printing plates

Bandes adhésives destinées au collage de plaques de pression

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **09.05.2008 DE 102008023023**
**15.05.2008 DE 102008023758**

(43) Veröffentlichungstag der Anmeldung:
**11.11.2009 Patentblatt 2009/46**

(73) Patentinhaber: **tesa SE**
20253 Hamburg (DE)

(72) Erfinder:
• **Ellringmann, Dr. Kai**
**22523, Hamburg (DE)**
• **Kerber, Kristin**
**20252, Hamburg (DE)**
• **Krawinkel, Dr. Thorsten**
**22457, Hamburg (DE)**
• **Fiencke, Jochen**
**22453, Hamburg (DE)**

**Beschreibung**

Die Erfindung betrifft eine Zusammensetzung zur Herstellung einer Haftklebemasse, eine entsprechende Haftklebemasse sowie ein doppelseitiges Klebeband, ausgerüstet mit dieser Haftklebemasse, insbesondere zur Verklebung von Druckplatten, wobei die Haftklebemasse ein sehr geringes Aufziehverhalten auf polaren Oberfläche besitzt, leicht repositionierbar ist und nach der Verklebung auf dem Druckzylinder ein geringes Kantenabheben der Druckplatte und des Verbundes aus Klischeeklebeband und Druckplatte aufweist.

In der Druckindustrie sind unterschiedliche Verfahren bekannt, um Motive mittels druckender Vorlagen auf beispielsweise Papier zu übertragen. Eine Möglichkeit besteht im sogenannten Flexodruck. Eine Ausführungsform des Flexodrucks stellt nun wiederum die Verwendung mehrschichtiger Photopolymer-Druckplatten mit flexiblem Unterbau dar, wobei diese Art des Druckens schon seit längerer Zeit zum Stand der Technik zählt. Die Druckplatten bestehen dabei aus mehreren Schichten unterschiedlichen polymeren Materials mit jeweils speziellen Aufgaben. Zum Beispiel weisen die Druckplatten "nyloflex ACE" der Firma FlintGroup mindestens zwei Schichten auf, nämlich eine lichtempfindliche Reliefschicht und darunter eine Stabilisierungsfolie.

Im Flexodruckverfahren werden flexible Druckplatten auf Druckzylinder verklebt. Zur Verklebung werden in der Regel doppelseitige Haftklebebänder eingesetzt, an die sehr hohe Anforderungen gestellt werden. Für den Druckprozess muss das Haftklebeband eine bestimmte Härte aber auch eine bestimmte Elastizität aufweisen. Diese Eigenschaften müssen sehr genau eingestellt werden, damit das erzeugte Druckbild gemäß den Anforderungen das gewünschte Ergebnis liefert. Weitere hohe Anforderungen werden an die Haftklebemasse gestellt, da hier die Klebkraft ebenfalls ausreichend sein sollte, damit sich die Druckplatte nicht von dem doppelseitigen Haftklebeband oder das Haftklebeband vom Zylinder ablöst. Dies gilt auch bei erhöhten Temperaturen von 40 bis 60 °C und bei höheren Druckgeschwindigkeiten. Neben dieser Eigenschaft muss die Haftklebemasse aber auch reversible Hafteigenschaften besitzen, da häufig Druckplatten verklebt und dann zur Repositionierung wieder abgelöst werden müssen. Diese Ablösbarkeit sollte auch bei einer Verklebung über einen längeren Zeitraum (bis zu 6 Monate) gegeben sein. Zudem ist es erwünscht, dass das Haftklebeband und insbesondere die Druckplatte sich ohne Zerstörung dieser, d. h. ohne großen Kraftaufwand wieder entfernt werden kann, da die Druckplatten in der Regel mehrfach eingesetzt werden. Zudem sollten keine Rückstände auf der Druckplatte und auf dem Zylinder verbleiben. Zusammenfassend werden somit sehr hohe Anforderungen an die für diesen Einsatz geeignete doppelseitige Haftklebebänder gestellt.

In der US 4,380,956 A wird ein Prozess zur Fixierung einer Druckplatte für den Flexodruckprozess beschrieben. Für diesen Prozess werden auch Haftklebemassen eingesetzt, die aber nicht genauer spezifiziert wurden.

In der GB 1,533,431 A wird ein doppelseitiges Haftklebeband beansprucht, dass eine elastomere Schicht enthält, die wiederum durch fragile Luftblasen aufgeschäumt ist. Die Luftblasen werden unter Druck während der Flexodruckanwendung zerdrückt.

In der US 4,574,697 A werden doppelseitige Haftklebebänder beansprucht, die als Trägermaterial einen flexiblen Polyurethanschaum aufweisen, der auf einer PET-Folie (Polyethylenterephthalat) fixiert ist. Die äußeren Schichten bestehen aus Haftklebemassen.

Das beschriebene Haftklebeband soll reversibel sein und sich von dem Druckzylinder und von der Druckplatte entfernen lassen. Ein ähnlicher Produktaufbau wurde in der EP 0 206 760 A beschrieben. Hier wurde als flexibler Schaumträger ein Polyethylenschaum eingesetzt.

In der US 4,574,712 A wird in Analogie zu der US 4,574,697 A ein ähnlicher Haftklebebandaufbau beschrieben. Bezüglich der Haftklebemassen findet hier die Einschränkung statt, dass die Klebkraft zu der Druckplatte und zu dem Druckzylinder kleiner sein sollte als zu der Trägerfolie und dem Trägerschaum.

In der US 3,983,287 A wird ein Laminat beschrieben, das als Trägermaterial ein nichtkompressibles Elastomer enthält. Die Kompressibilität wird durch Kugeln erreicht, die unter Druck zerstört werden und somit eine Flexibilität erzeugen.

In der US 5,613,942 A werden Haftklebebänder beschrieben, die besonders geeignet für Verklebungen auf feuchten Oberflächen sind. Es wird auch erwähnt, dass solche Haftklebebänder zur Verklebung von Druckplatten geeignet sind.

In der US 5,476,712 A wird ebenfalls ein doppelseitiges Haftklebeband beschrieben, dass im Flexodruckverfahren eingesetzt wird. Dieses Haftklebeband enthält wiederum ein thermoplastisches Elastomer, wobei hier eine zellförmige Struktur vorliegt, die durch expandierende Mikropartikel erzeugt werden.

In der EP 1 590 383 A werden Haftklebebänder zur Verklebung von Druckplatten und Verfahren zu deren Herstellung beschrieben. Die Erfindung betrifft Haftklebebänder und ein Verfahren zur Herstellung von Haftklebemassen zur Verklebung von Druckplatten, wobei die Haftklebemasse ein sehr geringes Aufziehverhalten auf polaren Oberflächen besitzt, leicht repositionierbar ist und nach der Verklebung auf dem Druckzylinder ein geringes Kantenabheben der Druckplatte und des Verbundes aus Klischeeklebeband und Druckplatte aufweisen soll.

In den obengenannten Fällen werden sehr viele unterschiedliche Haftklebemassen eingesetzt. Naturkautschukklebemassen besitzen gute klebrige Eigenschaften, sind aber üblicherweise nicht sehr scherfest bei Raumtemperatur und altern durch den Abbau über die im Polymer enthaltenen Doppelbindungen.

SIS oder SEBS basierende Haftklebemassen sind in der Regel sehr weich und haftklebrig und neigen auch bei hohen Temperaturen zu erweichen. Verklebt man unter Spannung die Druckplatte auf dem Druckzylinder mit einer SIS- oder SEBS-haltigen Haftklebemasse, so neigt die Druckplatte zum Ablösen, obwohl die Klebkraft hoch ist. Acrylathaftklebemassen sind dagegen besser zur Verklebung von Druckplatten auf Druckzylindern geeignet, müssen aber im Herstellungsprozess nach der Beschichtung vernetzt werden. Weiterhin neigen diese Haftklebemassen - durch die Vielzahl der Estergruppen und der daraus resultierenden Polarität - zu einem hohen Aufziehverhalten.

Als Resultat lassen sich die Druckplatten nur mit sehr hohem Kraftaufwand entfernen. Zudem muss die Haftklebemasse eine gewisse Härte aufweisen, damit die Druckplatten nach der Verklebung auf dem Druckzylinder über einen längeren Zeitraum nicht zum Kantenabheben neigen.

Das Phänomen des Kantenabhebens ist ein für fast alle gängigen im Markt befindlichen Druckplatten-Verklebungsbänder bekanntes Problem und resultiert daraus, dass die flexiblen Druckplatten nach der Verklebung auf einen Druckzylinder - und der dabei zwangsläufig erfolgten Verformung - ein Rückstellbestreben in die ebene Fläche aufweisen. Das Kantenabhebebestreben ist unter anderem vom Zylinderdurchmesser, von der Druckplattendicke und deren Beschaffenheit, vom Vorhandensein eines nicht zum Drucken verwendeten Druckplattenrandes (der dann dünner ist und geringere Rückstellkräfte aufweist), vom Druckdesign am Plattenrand (ist die Druckplatte vollflächig bedruckt, so hat die Druckplatte üblicherweise die höchsten Rückstellkräfte), von der Reinigung der Druckplattenrückseite vor der Montage auf den Zylinder, vom Andruck der Platten bei der Verklebung und von weiteren Parametern abhängig.

Bei gleichzeitigem Einsatz mehrerer Druckplatten werden die Anforderungen an den Spalt zwischen den üblicherweise nahtlos verklebten Druckplatten immer größer, insbesondere wenn großflächige Drucke erzeugt werden sollen, bei denen der Übergang nicht zu sehen sein soll. Der Flexodruck (also der Druck mittels Druckplatten) geht immer mehr in Konkurrenz zu anderen Verfahren wie beispielsweise dem Tiefdruck, sio dass die vorgenannten Anforderungen an Bedeutung gewinnen. Neben der Tatsache, dass der Spalt immer kleiner (für das Druckbild weniger erkennbar) werden muss, ist auch die Möglichkeit des Belassens eines nicht-druckenden Randes nicht mehr gegeben.

Die Drucker versuchen dieser Problematik derzeit dadurch Herr zu werden, dass sie Druckverfahren mit mehreren Arbeitsschritten durchführen, was aber mit einem erheblichen Aufwand und mit zusätzlichen Kosten verbunden ist.

Aufgabe der Erfindung ist es daher, eine Haftklebemasse anzubieten, die sich hervorragend für die Verklebung von flexiblen Druckplatten (im Weiteren auch als "Klischees" bezeichnet) eignet, sowie ein Haftklebeband mit einer solche Haftklebemasse zur Verfügung zu stellen, so dass auch nach längerer Lagerung unter leicht erhöhten Temperaturen kein oder zumindest ein stark vermindertes Kantenabheben festzustellen ist, wenn eine flexible Druckplatte mit einem solchen Haftklebeband auf einem Druckzylinder verklebt ist.

Überraschenderweise und für den Fachmann nicht vorhersehbar wird die Aufgabe gelöst durch eine Haftklebemasse, erhältlich durch eine Zusammensetzung, wie sie im Anspruch 1 dargestellt ist. Die weiteren Ansprüche umfassen eine solche Haftklebemasse, ein Haftklebeband mit einer solchen Haftklebemasse, Weiterentwicklungen der Erfindung sowie die Verwendung einer erfindungsgemäßen Haftklebemasse für ein Klebeband zur Verwendung für den dargestellten Zweck.

Dementsprechend betrifft der Anspruch 1 eine Zusammensetzung zur Herstellung einer vernetzten Haftklebemasse umfassend

A. eine Haftklebemasse aus

A1). 60 bis 90 Gew.-% einer Polymerkomponente auf Basis von

a) 5 bis 25 Gew.-% (bezogen auf die Polymerkomponente) einer oder mehrerer Verbindungen mit zumindest einer ethylenisch ungesättigten Bindung, wobei die Monomere jeweils derart gewählt sind, dass die Glasübergangstemperaturen $T_G$ der entsprechenden Homopolymere mindestens 0° C betragen, wobei ein Teil der Verbindungen mit zumindest einer ethylenisch ungesättigten Bindung weiterhin zumindest eine Carboxylgruppe aufweist,
b) 75 bis 95 Gew.-% (bezogen auf die Polymerkomponente) Acrylsäureester und/oder Methacrylsäureester, die jeweils derart gewählt werden, dass die Glasübergangstemperaturen $T_G$ der entsprechenden Homopolymere nicht mehr als - 20 °C betragen;

A2). 10 bis 40 Gew.-% zumindest einer Harzkomponente mit einem Erweichungspunkt von mindestens 100 °C,

und
B. zumindest einem bi- oder polyfunktionellen Vernetzer,
wobei
der zumindest eine Vernetzer in einer Menge zugegen ist, dass das Mengenverhältnis $V = n_Z/n_P$ der Stoffmenge

$n_Z$ der vernetzungsaktiven Zentren des Vernetzers zu der theoretischen Stoffmenge $n_P$ der Makromoleküle der Polymerkomponente A1 einen Wert zwischen 1,5 und 2,5 besitzt,

wobei

sich die Stoffmenge $n_Z$ der vernetzungsaktiven Zentren des Vernetzers ergibt aus der mit der Anzahl f der vernetzungsaktiven Zentren pro Vernetzermolekül multiplizierten Masse $m_V$ des Vernetzers geteilt durch die Molmasse $M_V$ des Vernetzers, also $n_Z = f \cdot m_V / M_V$

und die theoretische Stoffmenge $n_P$ der Makromoleküle der Polymerkomponente A1 sich ergibt aus der Masse $m_P$ der Polymerkomponente in der Haftklebemasse geteilt durch die zahlenmittlere Molmasse $M_{n,P}$ dieser Komponente, also $n_P = m_P / M_{n,P}$.

Als Vernetzer werden insbesondere solche Verbindungen ausgewählt, die in der Lage sind, kovalente, ionische oder koordinative Bindungen aufzubauen. In einer sehr bevorzugten Vorgehensweise können die Bindungen ohne die Zufuhr von aktinischer Strahlung gebildet werden. Unter der Funktionalität des Vernetzers wird bei reaktiven Vernetzern die Anzahl f der funktionellen Gruppen (z.B. die NCO-Gruppe in Isocyanat) verstanden, die unter Vernetzungsbedingungen zur Ausbildung einer kovalenten Bindung zu einem Polymermolekül führen können. Bei Vernetzern auf Basis von Metallchelaten (beispielsweise Aluminium-(III)-acetylacetonat mit 3 Koordinationsstellen) wird unter der Anzahl f die zur Verfügung stehenden Koordinationsstellen verstanden, über die unter Vernetzungsbedingungen jeweils eine - insbesondere koordinative - Bindung zu einem Polymermolekül aufgebaut werden kann.

Glastemperaturen werden als Ergebnisse aus quasistatischen Verfahren wie z. B. Differential Scanning Calorimetry (DSC) angegeben.

Die Angabe der Erweichungspunkte erfolgte analog der DIN EN 1427:2007 mit dem zu untersuchenden Harz statt Bitumen; wobei bei Erweichungstemperaturen von oberhalb 150 °C die Durchführung 8.1 b) aus dieser Vorschrift analog angewandt wird.

Durch Vernetzung dieser Zusammensetzung erhält man eine Haftklebemasse, die für Verwendung zur Verklebung von flexiblen Druckplatten auf Druckzylindern oder Druckhülsen ("Sleeves") hervorragend geeignet ist, insbesondere indem ein doppelseitiges Klebeband, welches zu diesem Einsatzzweck verwendet werden soll, zumindest auf einer Seite mit dieser Haftklebemasse ausgerüstet ist. Die Vernetzung sollte dabei bevorzugt bis zu einem vollständigen Umsatz des Vernetzers geführt werden, insbesondere bis zu einem Vernetzerumsatz von mindestens 80 %, besser bis zu einem Vernetzerumsatz von mindestens 90 %.

Als Vernetzer (Komponente B) eignen sich erfindungsgemäß hervorragend Metallchelate, wie insbesondere Aluminium- oder Titanchelate, multifunktionelle Isocyanate, multifunktionelle Amine, multifunktionelle Alkohole oder multifunktionelle Epoxide.

Die Einwaage des vorteilhaft eingesetzten Vernetzers $m_V$ ergibt sich mit den eingeführten Definitionen der entsprechenden Werte aus der Einwaage der Polymerkomponente $m_P$ und deren zahlenmittlerer Molmasse $M_{n,P}$ wie folgt:

$$m_V = \frac{V \cdot m_P \cdot M_V}{M_{n,P} \cdot f}$$

Für die vernetzte Haftklebemasse ergibt sich in guter Näherung eine Vernetzungsdichte, die im Mittel 1,5 bis 2,5 Vernetzungsstellen pro Makromolekül der Polymerkomponente entspricht, insbesondere wenn die Vernetzungsreaktion bis zu einem weitgehend vollständigen Umsatz durchgeführt wird.

Erfindungsgemäß können auch mehrere Vernetzer eingesetzt werden. Wenn mehrere Vernetzer, insbesondere auch unterschiedlicher Funktionalität, verwendet werden, ist in die in Anspruch 1 angegebene Definition für das Verhältnis V anzusetzen:

$$V = n_Z / n_P,$$

wobei $n_Z$ die über alle Vernetzer summierte Stoffmenge der vernetzungsaktiven Zentren ergibt:

$$n_Z = f_1 \cdot m_{V,1} / M_{V,1} + f_2 \cdot m_{V,2} / M_{V,2} \dots$$

wobei der Index 1 die Werte des ersten Vernetzers, 2 die des zweiten Vernetzers usw. bedeutet.

Als Monomere im Sinne der Komponente A1)a) mit zumindest einer ethylenisch ungesättigten Bindung, die derart gewählt sind, dass die Glasübergangstemperaturen $T_G$ der entsprechenden Homopolymere mindestens 0° C betragen, können im Sinne dieser Komponente insbesondere alle vinylisch-funktionalisierten Verbindungen eingesetzt werden, die mit der Komponente A1)b) copolymerisierbar sind und die entsprechende Glasübergangstemperaturenbedingung erfüllen; sie können insbesondere auch zur Einstellung der Eigenschaften der resultierenden Haftklebemasse dienen.

Beispielhaft genannte Monomere für die Komponente A1)a) sind:

Methylacrylat, Ethylacrylat, Propylacrylat, Methylmethacrylat, Ethylmethacrylat, Benzylacrylat, Benzylmethacrylat, sec.-Butylacrylat, tert-Butylacrylat, Phenylacrylat, Phenylmethacrylat, Isobornylacrylat, Isobornylmethacrylat, t-Butylphenylacrylat, t-Butylaphenylmethacrylat, Dodecylmethacrylat, Isodecylacrylat, Laurylacrylat, n-Undecylacrylat, Stearylacrylat, Tridecylacrylat, Behenylacrylat, Cyclohexylmethacrylat, Cyclopentylmethacrylat, Phenoxyethylacrlylat, Phenoxyethylmethacrylat, 2-Butoxyethylmethacrylat, 2-Butoxy-ethylacrylat, 3,3,5-Trimethylcyclohexylacrylat, 3,5-Dimethyladamantylacrylat, 4-Cumyl-phenylmethacrylat, Cyanoethylacrylat, Cyanoethylmethacrylat, 4-Biphenylacrylat, 4-Biphenylmethacrylat, 2-Naphthylacrylat, 2-Naphthylmethacrylat, Tetrahydrofufuryl-acrylat, Diethylaminoethylacrylat, Diethylaminoethylmethacrylat, Dimethylaminoethyl-acrylat, Dimethylaminoethylmethacrylat, 2-Butoxyethylacrylat, 2-Butoxyethylmethacrylat, 3-Methoxyacrylsäuremethylester, 3-Methoxybutylacrylat, Phenoxyethylacrlylat, Phenoxyethylmethacrylat, 2-Phenoxyethylmethacrylat, Butyldiglykolmethacrylat, Ethylenglycolacrylat, Ethylenglycolmonomethylacrylat, Methoxy Polyethylenglykolmethacrylat 350, Methoxy Polyethylenglykolmethacrylat 500, Propylenglycolmonomethacrylat, Butoxydiethylenglykolmethacrylat, Ethoxytriethylenglykolmethacrylat, Octafluoropentylacrylat, Octafluoropentylmethacrylat, 2,2,2-Trifluoroethylmethacrylat, 1,1,1,3,3,3-Hexafluoroisopropylacrylat, 1,1,1,3,3,3-Hexafluoroisopropylmethacrylat, 2,2,3,3,3-Pentafluoropropylmethacrylat, 2,2,3,4,4,4-Hexafluorobutylmethacrylat, 2,2,3,3,4,4,4-Heptafluorobutylacrylat, 2,2,3,3,4,4,4-Heptafluorobutylmethacrylat, 2,2,3,3,4,4,5,5,6,6,7,7,8,8,8-Pentadecafluorooctylmethacrylat,

Dimethylaminopropylacrylamid, Dimethylaminopropylmethacrylamid, N-(1-Methylundecyl)acrylamid, N-(n-Butoxymethyl)acrylamid, N-(Butoxymethyl)methacrylamid, N-(Ethoxymethyl)acrylamid, N-(n-Octadecyl)acrylamid, weiterhin N,N-Dialkyl-substituierte Amide, wie beispielsweise N,N-Dimethylacrylamid, N,N-Dimethylmethacrylamid, N-Benzylacrylamide, N-Isopropylacrylamid, N-tert.-Butylacrylamid, N-tert-Octylacrylamid, N-Methylolacrylamid, N-Methylolmethacrylamid,

Acrylnitril, Methacrylnitril, Vinylether, wie Vinylmethylether, Ethylvinylether, Vinylisobutylether, Vinylester, wie Vinylacetat, Vinylchlorid, Vinylhalogenide, Vinylidenchlorid, Vinylidenhalogenide, Vinylpyridin, 4-Vinylpyridin, N-Vinylphthalimid, N-Vinyllactam, N-Vinylpyrrolidon, Styrol, $\alpha$- und p-Methylstyrol, $\alpha$-Butylstyrol, 4-n-Butylstyrol, 4-n-Decylstyrol, 3,4-Dimethoxystyrol. Makromonomere wie 2-Polystyrolethylmethacrylat (Molekulargewicht Mw von 4000 bis 13000 g/mol), Poly(Methylmethacrylat)ethylmethacrylat (Mw von 2000 bis 8000 g/mol).

Monomere im Sinne der Komponente A1)a) mit zumindest einer ethylenisch ungesättigten Bindung, die derart gewählt sind, dass die Glasübergangstemperaturen $T_G$ der entsprechenden Homopolymere mindestens 0°C betragen, und die zumindest eine Carboxylgruppe aufweisen, werden bevorzugt gewählt aus der Gruppe umfassend Acrylsäure und/oder Methacrylsäure, wobei Acrylsäure besonders bevorzugt eingesetzt wird.

Monomere im Sinne der Acrylsäureester und/oder Methacrylsäureester der Komponente A1)b) sind insbesondere weichmachende und/oder unpolare Monomere.

Vorzugsweise werden für diese Monomere Acrylmonomere eingesetzt, die Acryl- und Methacrylsäureester mit Alkylgruppen, bestehend aus 4 bis 14 C-Atomen, bevorzugt 4 bis 9 C-Atomen, umfassen. Beispiele für derartige Monomere sind n-Butylacrylat, n-Butylmethacrylat, n-Pentylacrylat, n-Pentylmethacrylat, n-Amylacrylat, n-Hexylacrylat, Hexylmethacrylat, n-Heptylacrylat, n-Octylacrylat, n-Octylmethacrylat, n-Nonylacrylat, Isobutylacrylat, Isooctylacrylat, Isooctylmethacrylat, und deren verzweigten Isomere, wie z. B. 2-Ethylhexylacrylat, 2-Ethylhexylmethacrylat.

Die Polymerkomponente der erfindungsgemäßen Haftklebemasse weist insbesondere vorteilhaft eine zahlenmittlere Molemasse $M_{N,P}$ zwischen ca. 30.000 und ca. 600.000 g/mol, bevorzugt zwischen 40.000 und 400.000 g/mol, besonders bevorzugt zwischen 50.000 g/mol und 300.000 g/mol auf.

Die Angaben der zahlenmittleren Molmasse $M_{n,P}$ und der Polydisperistät PD in dieser Schrift beziehen sich auf die Bestimmung per Gelpermeationschromatographie (siehe experimenteller Teil).

Der erfindungsgemäßen Haftklebemasse und entsprechend der Zusammensetzung zu ihrer Herstellung (also vor der Vernetzung) ist erfindungsgemäß zumindest ein Klebharz (Komponente A2) beigemischt. Prinzipiell lassen sich alle in der Polymerkomponente löslichen Harze verwenden, deren Erweichungspunkt wie oben dargestellt mindestens 100 °C beträgt. Geeignete Klebharze umfassen unter anderem Kolophonium und Kolophoniumderivate (Kolophoniumester, auch durch z. B. Disproportionierung oder Hydrierung stabilisierte Kolophoniumderivate), Polyterpenharze, Terpenphenolharze, Alkylphenolharze, aliphatische, aromatische und aliphatisch-aromatische Kohlenwasserstoffharze, um nur einige zu nennen. Vorrangig werden Harze gewählt, die vorzugsweise mit dem Polymer verträglich sind.

Optional können der Haftklebemasse Additive wie Weichmacher (Plastifizierungsmittel), Füllstoffe (z. B. Fasern, Ruß, Zinkoxid, Titandioxid, Kreide, Voll- oder Hohlglaskugeln, Mikrokugeln aus anderen Materialien, Kieselsäure, Silikate), Keimbildner, Blähmittel, Compoundierungsmittel und/oder Alterungsschutzmittel, z. B. in Form von primären und sekundären Antioxidantien oder in Form von Lichtschutzmitteln zugesetzt werden.

Die erfindungsgemäßen Haftklebesysteme zeichnen sich dadurch aus, dass sie das genannte Anforderungsprofil erfüllen und insbesondere folgende Vorteile aufweisen:

- vielfache Wiederverwendbarkeit (Repositionierbarkeit) der Haftklebebänder,
- Reversibilität auf verschiedenen Oberflächen,
- zufriedenstellend rückstandsfreie Wiederablösbarkeit vom Substrat,
- geringes Aufziehen auch auf polaren Oberflächen,
- minimiertes bzw. überhaupt kein Kantenabheben nach der Verklebung auf dem Druckzylinder.

Die Haftklebemasse hat eine Glasübergangstemperatur $T_G$, die unter der Anwendungstemperatur liegt. Die Anwendungstemperatur richtet sich dabei insbesondere nach den Anforderungen der Druckindustrie, vorteilhaft hat die Haftklebemasse eine Glasübergangstemperatur $T_G$, die geringer als Raumtemperatur ist. Zur Erzielung der Glasübergangstemperatur $T_G$ der Polymere werden entsprechend dem vorstehend und im weiteren gesagten die Monomere sehr bevorzugt derart ausgesucht und die mengenmäßige Zusammensetzung der Monomermischung vorteilhaft derart gewählt, dass sich nach der nachfolgenden Gleichung (in Analogie zur *Fox*-Gleichung, vgl. T.G. Fox, Bull. Am. Phys. Soc. 1 (1956) 123) der gewünschte $T_G$-Wert für das Polymer ergibt.

$$\frac{1}{T_G} = \sum_n \frac{w_n}{T_{G,n}}$$

Hierin repräsentiert n die Laufzahl über die eingesetzten Monomere, $w_n$ den Massenanteil des jeweiligen Monomers n (Gew.-%) und $T_{G,n}$ die jeweilige Glasübergangstemperatur des Homopolymers aus den jeweiligen Monomeren n in K.

Ein weiteres bevorzugtes Charakteristikum ist, dass die Polymerketten sehr bevorzugt in einem verzweigten Zustand als Pfropfpolymere vorliegen.

Die Polymere der Polymerkomponente können insbesondere vorteilhaft in einem zweistufigen Verfahren hergestellt werden.

Das Verfahren umfasst die Polymerisation einer Monomermischung umfassend die zugrunde liegenden Monomeere (Polymerkomponente A1) und weiterhin ein Polymerisationsverfahren zur Herstellung unter Verwendung von mindestens zwei thermisch zerfallenden Initiatoren mit einer Pfropfwirksamkeit von $\varepsilon < 5$ und von $\varepsilon > 10$, wobei mit $\varepsilon < 5$ zunächst linear polymerisiert wird und dann mit $\varepsilon > 10$ Pfropfpolymere hergestellt werden. In einem nachfolgenden Schritt wird dann vorteilhaft die Vernetzung unter Zusatz des Vernetzers in der einstehend beschriebenen Menge durchgeführt.

Zur Herstellung der erfindungsgemäßen Copolymere können prinzipiell alle radikalischen oder radikalisch-kontrolliert Polymerisationen eingesetzt werden, ebenso auch Kombinationen verschiedener Polymerisationsverfahren. Neben der konventionellen freien radikalischen Polymerisation seien z. B., ohne den Anspruch auf Vollständigkeit zu besitzen auch die ATRP, die Nitroxid/TEMPO- kontrollierte Polymerisation oder der RAFT-Prozess genannt, also insbesondere solche Verfahren, die eine Kontrolle der Kettenlängen oder der Polymerarchitektur erlauben.

Als radikalische Initiatoren für die freie radikalische Polymerisation können alle für Acrylate hierfür bekannten üblichen Initiatoren eingesetzt werden. Die Produktion von C-zentrierten Radikalen ist im Houben Weyl, Methoden der Organischen Chemie, Vol. E 19a, S. 60 - 147, beschrieben. Diese Methoden können in Analogie angewendet werden. Beispiele für Radikalquellen sind Peroxide, Hydroperoxide und Azoverbindungen, als einige nicht ausschließliche Beispiele für typische Radikalinitiatoren seien hier genannt Kaliumperoxodisulfat, Dibenzoylperoxid, Cumolhydroperoxid, Cyclohexanonperoxid, Di-t-butylperoxid, Azodiisosäurebutyronitril, Cyclohexylsulfonylacetylperoxid, Diisopropyl-percarbonat, t-Butylperoktoat, Benzpinacol. In einer sehr bevorzugten Variante werden die Initiatoren in mehreren Stufen hinzugegeben, so dass der Umsatz auf über 90 % gesteigert wird. Der in dem Polymer verbleibende Restmonomergehalt kann so auf unter 10 Gew.-% abgesenkt werden; durch einen geringen Restmonomergehalt werden die klebtechnischen Eigenschaften des Polyacrylates zur Verklebung von Druckzylindern erheblich verbessert.

Die zu Beginn eingesetzten Initiatoren werden dabei bevorzugt derart gewählt, dass sie eine geringe Tendenz zur Ausbildung von Seitenketten in den Polymeren aufweisen, ihre Pfropfwirksamkeit liegt bevorzugt unter einem Wert von $\varepsilon < 5$ bei der Temperatur des Reaktionsgemisches bei Zugabe des Initiators.

Die absolute Pfropfwirksamkeit (Crosslink-Effizienz) ist definiert als die Zahl der chemischen Seitenkettbildungen pro 100 Mol-Einheiten an zersetztem Initiator. In Analogie zu van Drumpt und Oosterwijk [Journal of Polymer Science, Polymer Chemistry Edition 14 (1976) 1495 - 1511] läßt sich ein Wert für diese Zahl durch Bestimmung der Dimeren in einer definierten Lösung des Initiators angeben, siehe auch DE 43 40 297 A1:

Eine genau 0,1 molare Lösung des Initiators wird in n-Pentadecan unter He-Atmosphäre zersetzt. Die Reaktionszeit wird so gewählt, dass sie dem Zehnfachen der bei der gewählten Temperatur gegebenen Halbwertszeit des jeweiligen Initiators entspricht. Dadurch ist ein praktisch vollständiger Zerfall des Initiators gewährleistet. Anschließend wird der Anteil an entstandenem dimeren Pentadecan mittels GLC gemessen. Der prozentuale Anteil $\varepsilon$ wird als Maß für die Pfropfwirksamkeit angegeben. Üblicherweise wählt man die Reaktionstemperatur so, dass die Halbwertszeit des zu prüfenden Initiators bei dieser Temperatur 15 min beträgt.
Hohe $\varepsilon$-Werte für die Pfropfwirksamkeit bedeuten eine hohe Tendenz des Initiators, bei der Polymerisation Seitenketten zu bilden, kleine $\varepsilon$-Werte resultieren hingegen in bevorzugt linearen Polymeren.

In einer bevorzugten Vorgehensweise des Verfahrens sieht der Verfahrensablauf wie folgt aus:

- Als Reaktionslösung wird eine zumindest 50%ige Lösung der Monomere unter Zusatz des Initiators mit einem Wert von $\varepsilon < 5$ eingesetzt,
- in einem Temperaturbereich von 50 °C bis 90 °C wird die radikalische Polymerisation durchgeführt,
- während der Polymerisation wird mindestens einmal mit einem Initiator für radikalische Polymerisationen mit geringer Tendenz zur Seitenkettenbildung (Pfropfwirksamkeit $\varepsilon < 5$ bei der aktuellen Reaktionstemperatur) nachinitiiert,
- gegebenenfalls wird die Reaktion durch Verdünnung der Reaktionslösung je nach Viskosität des Polymerisats gesteuert,
- eine kontrollierte Nachinitiierung findet mit bis zu 2 Gew.-%, bezogen auf das Monomerengemisch, eines Initiators mit erhöhter Tendenz zur Seitenkettenbildung (Pfropfwirksamkeit $\varepsilon > 10$ bei der aktuellen Reaktionstemperatur) statt,
- wobei die Polymerisation bis zu einem Umsatz > 90 %, bevorzugt > 95 % durchgeführt wird.

Bevorzugte Initiatoren mit einem geringen $\varepsilon$-Wert ($\varepsilon < 5$) sind solche, deren Radikale wegen ihres geringen Energiegehaltes keine oder nur selten Wasserstoffabstraktion an den Polymerketten verursachen. Bevorzugt werden hier zum Beispiel Azo-Initiatoren wie Azoisobuttersäuredinitril oder dessen Derivate, beispielsweise 2,2-Azobis-(2-methylbutyronitril) (Vazo67®, DuPont), verwendet.
Initiatoren mit einer hohen Seitenkettenbildungstendenz (hoher $\varepsilon$-Wert > 10) liefern bereits bei relativ niedrigen Temperaturen hohe Pfropfausbeuten. Besonders bevorzugt werden hier Bis-(4-t-Butylcyclohexyl)peroxidicarbonat (Perkadox 16®, Akzo Chemie), Dibenzoylperoxid oder dergleichen eingesetzt.
Die Polymerisation kann in Gegenwart eines organischen Lösungsmittels oder in Gegenwart von Wasser oder in Gemischen aus organischen Lösungsmitteln und/oder Wasser durchgeführt werden. Als Lösemittel für die Polymerisation können alle für radikalische Polymerisationen üblicherweise verwendeten oder geeigneten Lösemittel eingesetzt werden, insbesondere bieten sich Aceton, Essigester, Benzin, Toluol oder beliebige Gemische aus diesen Lösemitteln an. Bevorzugt wird so wenig Lösungsmittel wie möglich eingesetzt. Die Polymerisationszeit beträgt - je nach Umsatz, Temperatur und Initiierung - zwischen 6 und 48 h.
Weiterhin betrifft die Erfindung auch ein beidseitig klebend ausgerüstetes Klebeband zur Fixierung von Druckplatten, insbesondere von mehrschichtigen Photopolymer-Druckplatten auf Druckzylindern oder Druckhülsen (Sleeves).
In einer vorteilhaften Ausgestaltung des erfindungsgemäßen Klebebandes ist dieses zumindest aus einer Trägerschicht und jeweils aus einer Haftklebemassenschicht auf beiden Seiten der Trägerschicht aufgebaut.
Insbesondere ist der Träger des erfindungsgemäßen Klebebandes eine Folie, ein Schaumstoff oder ein Verbund aus mehreren Folien, mehreren Schaumstoffen oder aus zumindest einer Folie und zumindest einem Schaumstoff, wobei auf dem entsprechenden Träger oder Verbund beidseitig selbstklebende Beschichtungen aufgebracht sind, wobei zumindest die Seite zur Druckplatte mit der erfindungsgemäßen Haftklebemasse ausgerüstet ist. Vorteilhaft kann für beide Haftklebemassenschichten die erfindungsgemäße Haftklebemasse eingesetzt werden.
Erfindungsgemäß hervorragend geeignet ist ein doppelseitiges Klebeband, welches einen geschäumten Träger, eine Polymerfolie auf der einen Seite des geschäumten Trägers sowie jeweils eine Schicht einer Haftklebemasse auf beiden Seiten des Klebebandes umfasst, wobei zumindest eine der außenliegenden Haftklebemassenschichten eine erfindungsgemäße, vernetzte Haftklebemasse ist, wobei aber insbesondere beide Haftklebemassenschichten erfindungsgemäße Haftklebemassen sind.
Wird ein Verbund aus zumindest einer Folie und zumindest einem geschäumten Material ("Schaumstoff") als Träger eingesetzt, so können diese Trägerschichten in einer vorteilhaften vorgehensweise durch eine Klebemasse zusammenlaminiert sein und somit einen Trägerverbund ergeben. In einer weiteren Ausgestaltung können die Schichten durch Heißsiegelung miteinander verbunden werden. Zur Herstellung des Trägerverbundes können aber auch die sonstigen fachbekannten Methoden zum flächigen Verbinden zweier Schichten, insbesondere polymerer Natur, eingesetzt werden.

Auf der zum Druckzylinder gerichteten Seite des Haftklebebandes kann vorteilhaft die erfindungsgemäße Haftklebemasse eingesetzt werden, grundsätzlich können hier aber auch andere dem Fachmann bekannte Haftklebemassen eingesetzt werden. So eignen sich beispielsweise kautschukbasierende Haftklebemassen, Synthesekautschuk-Haftklebemassen, Haftklebemassen auf Basis von Polysilikonen, Polyurethanen, Polyolefinen oder Polyacrylaten.

Als Folienträger können die dem Fachmann geläufigen Materialien eingesetzt werden, insbesondere Polyester, Polyethylenterephthalat (PET), Polyethylen (PE), Polypropylen (PP), Biaxial orientiertes Polypropylen (BOPP), Polyvinylchlorid (PVC) etc. Diese Aufzählung ist nicht abschließend zu verstehen. Besonders bevorzugt wird eine Folie aus Polyethylenterephthalat eingesetzt.

Als Schaumträger eignen sich insbesondere vorteilhaft Polymerschäume, wobei die Trägerschäume zum Beispiel aus Polyolefinen, insbesondere Polyethylen oder Polypropylen, aus Polyurethanen oder aus Polyvinylchlorid bestehen.

Werden Schäume als Trägermaterialien eingesetzt, ist es insbesondere vorteilhaft, weiterhin zumindest einen stabilisierenden Träger auf zumindest einer Seite des geschäumten Trägers vorzusehen, so dass ein wie vorstehend dargestellter Trägerverbundes vorliegt. Der stabilisierende Träger kann insbesondere ein Papier oder eine Folie sein, insbesondere eine Folie aus Polyester, Polyethylenterephthalat, Polyethylen, Polypropylen, Biaxial orientiertes Polypropylen oder Poylvinylchlorid.

In vorteilhafter Weise kann auf beiden Seiten des Schaumträgers ein stabilisierender Träger vorgesehen sein.

Generell kann durch eine Aufrauung des Trägermaterials eine Verbesserung der Haftklebemassenverankerung vorgenommen werden. Ein Weg zur Aufrauung und zur chemischen Modifizierung der Polymerstruktur verläuft über die nasschemische Ätzung des Trägermaterials. Neben der Ätzung kann auch auf andere Weise vorbehandelt werden.

So lassen sich die Trägermaterialien zur Verbesserung der Verankerung physikalisch und chemisch vorbehandeln. Zur physikalischen Behandlung wird die Folie bevorzugt mit Flamme oder Corona oder Plasma behandelt. Für die chemische Vorbehandlung wird das Trägermaterial mit Vorstrich versehen, wobei in einer besonders bevorzugten Auslegung Reaktiv-Vorstriche verwendet werden. Als Vorstrichmaterialien eignen sich z.B. Reaktivprimer.

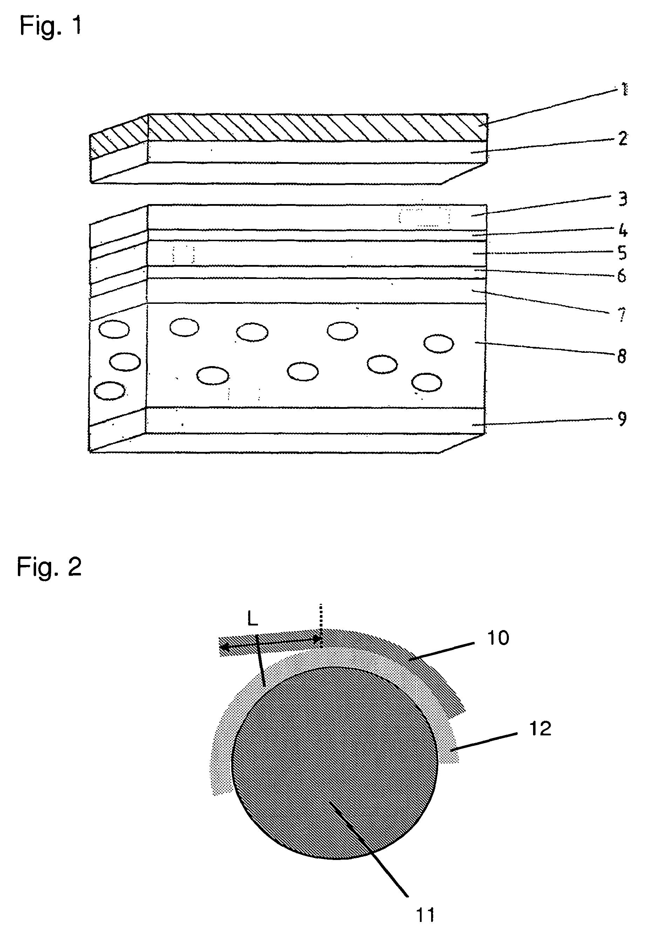

Für die Verwendung als doppelseitiges Haftklebeband zur Verklebung von Druckplatten besitzt das Haftklebeband in einer besonders bevorzugten Auslegung der Erfindung den Produktaufbau in Figur 1.

Das Klebeband dient zum Verkleben eines Klischees, das sich aus einer PET-Folie 2 und einer Schicht eines Fotopolymers 1 zusammensetzt.

Die Schichten 3 bis 9 bilden ein doppelseitig klebend ausgerüstetes Klischeeklebeband, das dank seines geschäumten Trägers 8 kompressibel und elastisch ist.

Beginnend von der Seite, mittels derer das Klischee verklebt wird, besteht das Klebeband aus folgenden einzelnen Abschnitten:

3 Haftklebemasse zur Verankerung des Klischees
4 Die aufgeraute obere Oberfläche der PET-Folie 5
5 Folie aus Polyethylenterephthalat (PET)
6 Die aufgeraute untere Oberfläche der PET-Folie 5
7 Haftklebemasse zur Verankerung des geschäumten Trägers 8 auf der Folie aus Polyethylenterephthalat (PET) 5
8 geschäumter Träger
9 Haftklebemasse zur Verankerung auf dem Druckzylinder

Gerade in der Druckindustrie ist es von Bedeutung, dass die hier eingesetzten Klebebänder eine hohe Flexibilität aufweisen, also ihre Dicke in gewissem Maße bei Druckanwendung verändern können beziehungsweise nach Wegnahme der Belastung wieder ihre ursprüngliche Form annehmen können.

Vorteilhaft ist darüber hinaus, wenn der geschäumte Träger 8 aus Polyolefin(en), Polyvinylchlorid (PVC) oder Polyurethan (PU) besteht. In einer besonders bevorzugten Auslegung werden geschäumte Polyethylene und Polypropylene eingesetzt. Weiter bevorzugt ist, wenn die Oberflächen des geschäumten Trägers physikalisch vorbehandelt sind, insbesondere Corona-vorbehandelt.

Weiter vorzugsweise hat die Folie aus Polyethylenterephthalat (PET) eine Dicke von 5 $\mu$m bis 500 $\mu$m, bevorzugt 5 $\mu$m bis 60 $\mu$m.

Weiterhin kann das erfindungsgemäße Klebeband ein- oder beidseitig mit einer Abdeckung aus Papier oder aus einer entsprechenden Folie, insbesondere einem beidseitig silikonisierten Papier oder einer beidseitig silikonisierten Folie oder einer Silikonfolie, versehen sein, um ein längeres Lagern und eine bequeme Handhabung während des Gebrauchs zu gewährleisten.

Aufgrund seiner speziellen Eigenschaften lässt sich das erfindungsgemäße beidseitig klebend ausgerüstete Klebeband hervorragend zur Fixierung von Druckplatten, insbesondere von mehrschichtigen Photopolymer-Druckplatten auf Druckzylindern oder Sleeves einsetzen.

Das erfindungsgemäße Klebeband ist aufgrund seiner besonderen Ausführung besonders mit den auf die Druckplatte abgestimmten Klebkräften hervorragend geeignet, die Druckplatten auf den Druckzylindern zu verkleben. Einerseits ist es möglich, die Druckplatten mehrfach vor Druckbeginn zu repositionieren, andererseits aber ist eine feste Verklebung der Platte während des Druckvorganges gewährleistet.

Die mit dem mit der erfindungsgemäßen Haftklebemasse ausgerüstetem Haftklebeband verklebte Druckplatte lässt sich vom Haftklebeband ohne irgendeine Beschädigung, insbesondere auch rückstandsfrei, entfernen.

Ein Abschälen der Trägerschicht der Platte oder die Bildung von unerwünschten Falten in der Platte während des Entfernens treten nicht auf. Auch nach dem Entfernen des Klebebands von dem Druckzylinder verbleiben keine Rückstände.

Die erfindungsgemäße Haftklebemasse ist insbesondere gut geeignet für die Herstellung von Klebebändern, die zur Verklebung insbesondere von dicken flexiblen Druckplatten ($\geq$ 1,7 mm Dicke, bevorzugt > 2 mm Dicke) eingesetzt werden sollen. Gegenüber den Klebebändern gemäß des Standes der Technik zur Verklebung von Druckplatten ist hier eine deutlich bessere Eignung festzustellen, insbesondere in Hinblick auf das Kantenabhebeverhalten. Selbstverständlich ist die Eignung auch für dünne Druckplatten hervorragend.

Experimente

Bestimmung des zahlenmittleren Molekulargewichts

Die Angaben der zahlenmittleren Molmasse $M_{n,P}$ und der Polydisperistät PD in dieser Schrift beziehen sich auf die Bestimmung per Gelpermeationschromatographie. Die Bestimmung erfolgt an 100 $\mu$l klarfiltrierter Probe (Probenkonzentration 4 g/l). Als Eluent wird Tetrahydrofuran mit 0,1 Vol.-% Trifluoressigsäure eingesetzt. Die Messung erfolgt bei 25 °C.

Als Vorsäule wird eine Säule Typ PSS-SDV, 5 $\mu$, $10^3$ Ä, ID 8,0 mm x 50 mm verwendet. Zur Auftrennung werden die Säulen des Typs PSS-SDV, 5 $\mu$, $10^3$ Å sowie $10^5$ Å und $10^6$ Ä mit jeweils ID 8,0 mm x 300 mm eingesetzt (Säulen der Firma Polymer Standards Service; Detektion mittels Differentialrefraktometer Shodex RI71). Die Durchflussmenge beträgt 1,0 ml pro Minute. Die Kalibrierung erfolgt gegen PMMA-Standards (Polymethylmethacrylat-Kalibrierung)].

Herstellung der Haftklebemasse

Ein für radikalische Polymerisationen unter Siedekühlung konventioneller 2 L-Glasreaktor wurde mit 300 g einer Monomermischung der für das jeweilige Beispiel in den Tabellen angegebenen Zusammensetzung und 200 g Aceton:Siedegrenzenbenzin 60/95 (1:1) befüllt. Nach 45 Minuten Durchleiten von Stickstoffgas unter Rühren wurde der Reaktor auf 58 °C hochgeheizt und 0,15 g 2,2'-azodi(2-methylbutyronitril (Vazo 67® , Fa. DuPont), gelöst in 6 g Aceton, hinzugegeben. Anschließend wurde das äußere Heizbad auf 75 °C erwärmt und die Reaktion konstant bei dieser Außentemperatur durchgeführt. Nach 1 h Reaktionszeit wurde wiederum 0,15 g VAZO 67®, gelöst in 6 g Aceton, hinzugegeben. Nach 3 Stunden wurde mit 90 g Aceton/Siedegrenzenbenzin 60/95 (1:1) verdünnt. Nach 5:30 Stunden Reaktionszeit wurden 0,45 g Bis-(4-tert.-Butylcyclohexanyl)-Peroxy-dicarbonat (Perkadox 16®, Fa Akzo Nobel), gelöst in 9 g Aceton, hinzugegeben. Nach 7 Stunden Reaktionszeit wurden 0,45 g Bis-(4-tert.-Butylcyclohexanyl)-Peroxy-dicarbonat (Perkadox 16®, Fa Akzo Nobel), gelöst in 9 g Aceton, hinzugegeben. Nach 10 Stunden Reaktionszeit wurde mit 90 g Aceton/Siedegrenzenbenzin 60/95 (1:1) verdünnt. Die Reaktion wurde nach 24 h Reaktionszeit abgebrochen und auf Raumtemperatur abgekühlt. Anschließend wurde das Polymerisat mit der entsprechenden Menge Klebharz (siehe Tabellen) und der entsprechenden Menge Aluminium-(III)-acetylacetonat (3 %ige Lösung in Aceton) abgemischt und auf einen Feststoffgehalt von 30 % mit Aceton/Siedegrenzenbenzin 60/95 (1:1) verdünnt.

Herstellung des doppelseitigen Haftklebebandverbundes:

Eine 23 $\mu$m dicke PET-Folie, die beidseitig mit Trichloressigsäure geätzt worden war, wurde mit den in den Beispielen angegeben, wie vorstehend beschrieben hergestellten Haftklebemassen beschichtet. Nach Trocknung für 15 Minuten bei 120 °C,. wobei die Vernetzungsreaktion stattfand, betrug der Masseauftrag 30 g/m$^2$.

Die so beschichteten Muster wurden mit einem beidseitig silikonisierten Trennpapier abgedeckt. Anschließend wurde über einen Transferträger eine handelsübliche Acrylathaftklebemasse mit einem Masseauftrag von 20 g/m$^2$ auf die unbeschichteten Seite des vorherigen Verbundes auflaminiert.

Im folgenden Schritt wurde ein Polyethylen-Ethylvinylacetat-Schaum mit einer Dicke von 500 $\mu$m und einem Raumgewicht von 270 kg/m$^3$ zukaschiert. Auf diesen Schaumträger wurde dann über einen Transferträger eine handelsübliche Acrylathaftklebemasse mit einem Masseauftrag von 50 g/m$^2$ auf die unbeschichteten Seite des vorherigen Verbundes auflaminiert.

Verklebung der Druckplatten und Anwendung:

Auf einen Stahlzylinder mit einem Durchmesser von 110 mm wurden die oben beschriebenen doppelseitigen Haftklebebänder mit der handelsüblichen Klebmasse (s. Figur 1 Schicht 9) geklebt. Eine Druckplatte der Fa. DuPont Cyrel HOS mit einer Dicke von 2,54 mm wurde auf die zu prüfende Klebemasse (erfindungsgemäße Beispiele bzw. Referenzbeispiele; Schicht 3 in Figur 1) verklebt. Dieser Stahlzylinder mit Druckplatte wurde anschließend in eine Druckmaschine eingelegt; hiermit wurde für 16 h mit einer Druckbeistellung von 150 $\mu$m gedruckt. Nach 3-tägiger Lagerung bei 23 °C und 50 % Luftfeuchtigkeit wurde das Kantenabheben der Druckplatte vom doppelseitigen Haftklebeband bestimmt.

Bewertung:

Zur Auswertung der Beispiele wurde beobachtet, ob nach der Lagerungszeit ein Abheben der flexiblen Druckplatte vom auf dem Zylinder verklebten Klebeband zu beobachten war. Ein Maß für das Kantenabheben war dabei die in Tangentialrichtung gemessene Länge L des nicht mehr verklebten Stücks der Druckplatte (des abgehobenen Druckplattenstücks), gemessen von dem freiliegenden Ende bis zu der ersten noch verklebten Stelle (vgl. Fig. 2: 10 = Druckplatte, 11 = Druckzylinder, 12 = Klebeband, L = Länge des abgehobenen Druckplattenstücks).

Das Verhalten des Klebebandes wurde als erfolgreich bewertet, wenn das Kantenabheben gemäß dem beschriebenen Test weniger als 5 mm betrug, beim Entfernen der Druckplatte von dem Klebeband weniger als 1 % Masserückstände auf der Druckplatte zurückblieben und die Druckplatte bei der Demontage nicht beschädigt wurde.

Tabelle 1

| Nicht erfolgreiche Vergleichsbeispiele | | | | |
|---|---|---|---|---|
| | | **R1** | **R2** | **R3** |
| **Acrylsäure** | [Gew.-%] | 3,2 | 2,1 | 2,4 |
| **Methylacrylat** | [Gew.-%] | | 7,0 | 8,0 |
| **Stearylacrylat** | [Gew.-%] | 16,0 | | |
| **N-tert-Butylacrylamid** | [Gew.-%] | | | |
| **Ethylhexylacrylat** | [Gew.-%] | 60,8 | 30,45 | 34,8 |
| **Butylacrylat** | [Gew.-%] | | 30,45 | 34,8 |
| **Foralyn 90®** | [Gew.-%] | 20,0 | | |
| **Sylvares TP 95®** | [Gew.-%] | | 30,0 | |
| **DT 135®** | [Gew.-%] | | | 20,0 |
| **Sylvares TP 7042®** | [Gew.-%] | | | |
| **Al-Chelat** | | | | |
| **Einwaage Vernetzer / 100 g Polymer** | g | 0,2 | 0,2 | 0,4 |
| **Mn,P** | kg/mol | 102,0 | 98,0 | 98,0 |
| **V** | | 1,8871 | 1,8131 | 3,6263 |
| **Ergebnis** | | sehr hohes Kantenabheben | zerstört die Druckplatte | hohes Kantenabheben |

Tabelle 2

| Variation der Harzmenge bzw. der Polymerzusammensetzung | | | | | | | | |
|---|---|---|---|---|---|---|---|---|
| | | **B1** | **B2** | **B3** | **B4** | **B5** | **B6** | **B7** |
| **Acrylsäure** | [Gew.-%] | 2,4 | 2,7 | 2,6 | 2,4 | 2,25 | 2,55 | 2,4 |
| **Methylacrylat** | [Gew.-%] | 8,0 | 9,0 | 8,5 | 8,0 | 7,5 | | 8,0 |
| **Stearylacrylat** | [Gew.-%] | | | | | | | 8,0 |
| **N-tert-Butylacrylamid** | [Gew.-%] | | | | | | 8,5 | |
| **Ethylhexylacryl at** | [Gew.-%] | 34,8 | 39,2 | 37,0 | 34,8 | 32,625 | 52,7 | 30,8 |
| **Butylacrylat** | [Gew.-%] | 34,8 | 39,2 | 37,0 | 34,8 | 32,625 | 21,25 | 30,8 |
| **Foralyn 90®** | [Gew.-%] | | | | | | | |
| **Sylvares TP 95®** | [Gew.-%] | | | | | | | |
| **DT 135®** | [Gew.-%] | 20,0 | 10,0 | | | | | 20,0 |
| **Sylvares TP 7042®** | [Gew.-%] | | | 15,0 | 20,0 | 25,0 | 15,0 | |
| **Al-Chelat** | | | | | | | | |
| **Einwaage Vernetzer / 100 g Polymer** | g | 0,2 | 0,2 | 0,2 | 0,2 | 0,2 | 0,2 | 0,2 |
| **Mn,P** | kg/mol | 98,0 | 98,0 | 98,0 | 98,0 | 98,0 | 87,0 | 115,0 |
| **V** | | 1,8131 | 1,8131 | 1,8131 | 1,8131 | 1,8131 | 1,6096 | 2,1277 |
| **Ergebnis** | | erfolgreich | erfolgreich | erfolgreich | erfolgreich | erfolgreich | erfolgreich | erfolgreich |

EP 2 116 584 B1

Tabelle 3

| Variation der Vernetzermenge | | B6 | B7 | B8 | B9 | B10 | B11 |
|---|---|---|---|---|---|---|---|
| **Acrylsäure** | [Gew.-%] | 2,4 | 2,4 | 2,4 | 2,4 | 2,4 | 2,4 |
| **Methylacrylat** | [Gew.-%] | 8,0 | 8,0 | 8,0 | 8,0 | 8,0 | 8,0 |
| **Stearylacrylat** | [Gew.-%] | | | | | | |
| **N-tert-Butylacrylamid** | [Gew.-%] | | | | | | |
| **Ethylhexylacrylat** | [Gew.-%] | 34,8 | 34,8 | 34,8 | 34,8 | 34,8 | 34,8 |
| **Butylacrylat** | [Gew.-%] | 34,8 | 34,8 | 34,8 | 34,8 | 34,8 | 34,8 |
| **Foralyn 90®** | [Gew.-%] | | | | | | |
| **Sylvares TP 95®** | [Gew.-%] | | | | | | |
| **DT 135®** | [Gew.-%] | 20,0 | 20,0 | 20,0 | 20,0 | 20,0 | 20,0 |
| **Sylvares TP 7042®** | [Gew.-%] | | | | | | |
| **Al-Chelat** | | | | | | | |
| **Einwaage Vernetzer / 100 g Polymer** | g | 0,1 | 0,15 | 0,175 | 0,2 | 0,25 | 0,3 |
| **Mn,P** | kg/mol | 98,0 | 98,0 | 98,0 | 98,0 | 98,0 | 98,0 |
| **V** | | 0,9066 | 1,3599 | 1,5865 | 1,8131 | 2,2664 | 2,7197 |
| **Ergebnis** | | Masserückstände | Masserückstände | erfolgreich | erfolgreich | erfolgreich | hohes Kantenabheben |

12

Spezifizierung der Harze:

Foralyn 90®:

Glycerinester von teilhydriertem Kolophonium, Erweichungstemperatur 84 - 92 °C (typischer Wert 89 °C; Herstellerangabe) (Eastman Chemical BV)

Sylvares TP 95®:

Terpenphenolharz, Erweichungstemperatur 92 - 98 °C (typischer Wert 95 °C; Herstellerangabe) (Arizona Chemical)

DT 135®:

Terpenphenolharz mittlerer Polarität, Erweichungstemperatur 135 °C (Herstellerangabe) (DRT Resins)

Sylvares TP 7042®:

Terpenphenolharz, Erweichungstemperatur 145 - 151 °C (typischer wert 145 °C; Herstellerangabe) (Arizona Chemical)

Al-Chelat = Aluminium-(III)-acetylacetonat (3 %ige Lösung Aceton)

Die Angabe der Vernetzereinwaage ist normiert auf jeweils 100 g Polymerkomponente [entsprechend 100 g der Monomermischung der für das jeweilige Beispiel in den Tabellen angegebenen Zusammensetzung (ohne die Harzkomponente]

$M_{n,P}$ = zahlenmittleres Molekulargewicht der Polymerkomponente

$V = n_Z/n_P$ Verhältnis der Stoffmenge $n_Z$ der vernetzungsaktiven Zentren des Vernetzers zu der theoretischen Stoffmenge $n_P$ der Makromoleküle der Polymerkomponente A1

Die Ergebnisse zeigen, dass die erfindungsgemäße Haftklebemasse hervorragend für das gestellte Anforderungsprofil geeignet ist.

Tabelle 1 zeigt 3 Referenzbeispiele aus dem Stand der Technik, die das erforderte Ergebnis nicht gewährleisten können. Die Beispiele R1 und R2 weisen Harze auf, deren Erweichungstemperatur zu niedrig ist. Es sind ein sehr hohes Kantenabhebeverhalten bzw. eine Zerstörung der verklebten Druckplatte bei der Wiederablösung des Klebebandes festzustellen. R3 ist ein Beispiel, bei dem die Vernetzerkonzentration oberhalb der erforderlichen Menge gewählt wurde. Auch hier ist ein hohes Kantenabheben festzustellen.

Tabelle 2 zeigt eine Reihe von erfindungsgemäßen Beispielen, bei denen jeweils der Harzanteil der Haftklebemasse bzw. die Zusammensetzung der Polymerkomponente im erfindungsgemäßen Rahmen variiert wurde. Alle Beispiele zeigen ein erfolgreiches Ergebnis, erfüllen also das Anforderungsprofil.

Tabelle 3 zeigt eine Variation der zugegebenen Vernetzermenge. Es kann festgestellt werden, dass die Beispiele, bei denen das Verhältnis V der Stoffmenge $n_Z$ der vernetzungsaktiven Zentren des Vernetzers zu der theoretischen Stoffmenge $n_P$ der Makromoleküle der Polymerkomponente A1 im geforderten Bereich eingestellt wird, erfolgreiche Ergebnisse resultieren. Wählt man das Verhältnis V zu gering, so sind bei der Wiederablösung der Druckplatte von dem Klebeband auf der Druckplatte Rückstände der Haftklebemasse zu beobachten. Wählt man das Verhältnis V mit zu hohen Werten, so ist ein hohes Kantenabhebeverhalten festzustellen.

## Patentansprüche

1. Zusammensetzung zur Herstellung einer vernetzten Haftklebemasse umfassend

A. eine Haftklebemasse aus

A1). 60 bis 90 Gew.-% einer Polymerkomponente auf Basis von

a) 5 bis 25 Gew.-% (bezogen auf die Polymerkomponente) einer oder mehrerer Verbindungen mit zumindest einer ethylenisch ungesättigten Bindung, wobei die Monomere jeweils derart gewählt sind, dass die Glasübergangstemperaturen $T_G$ der entsprechenden Homopolymere mindestens 0°C betragen,

wobei ein Teil der Verbindungen mit zumindest einer ethylenisch ungesättigten Bindung weiterhin zumindest eine Carboxylgruppe aufweist,

b) 75 bis 95 Gew.-% (bezogen auf die Polymerkomponente) Acrylsäureester und/oder Methacrylsäureester, die jeweils derart gewählt werden, dass die Glasübergangstemperaturen $T_G$ der entsprechenden Homopolymere nicht mehr als - 20 °C betragen;

A2). 10 bis 40 Gew.-% zumindest einer Harzkomponente mit einem Erweichungspunkt von mindestens 100 °C,

und

B. zumindest einem bi- oder polyfunktionellen Vernetzer,

wobei

der zumindest eine Vernetzer in einer Menge zugegen ist, dass das Mengenverhältnis $V = n_Z/n_P$ der Stoffmenge $n_Z$ der vernetzungsaktiven Zentren des Vernetzers zu der theoretischen Stoffmenge $n_P$ der Makromoleküle der Polymerkomponente A1 einen Wert zwischen 1,5 und 2,5 besitzt,

wobei

sich die Stoffmenge $n_Z$ der vernetzungsaktiven Zentren des Vernetzers ergibt aus der mit der Anzahl f der vernetzungsaktiven Zentren pro Vernetzermolekül multiplizierten Masse $m_V$ des Vernetzers geteilt durch die Molmasse $M_V$ des Vernetzers, also $n_Z = f \cdot m_V/M_V$

und die theoretische Stoffmenge $n_P$ der Makromoleküle der Polymerkomponente A1 sich ergibt aus der Masse $m_P$ der Polymerkomponente in der Haftklebemasse geteilt durch die zahlenmittlere Molmasse $M_{n,P}$ dieser Komponente, also $n_P = m_P/M_{n,P}$.

**2.** Zusammensetzung nach Anspruch 1, **dadurch gekennzeichnet, dass** die Polymerkomponente eine Molmasse $M_{n,P}$ zwischen ca. 30.000 und ca. 600.000 g/mol, vorzugsweise zwischen ca. 40.000 und ca. 400.000 g/mol, besonders bevorzugt zwischen ca. 50.000 und ca. 300.000 aufweist.

**3.** Haftklebemasse, erhältlich durch Vernetzung der Zusammensetzung gemäß einem der vorangehenden Ansprüche.

**4.** Doppelseitiges Klebeband zur Verklebung von flexiblen Druckplatten, umfassend zumindest einen Träger und zwei außenliegenden Haftklebemassenschichten, **dadurch gekennzeichnet, dass** zumindest eine der außenliegenden Haftklebemassenschichten eine vernetzte Haftklebemasse nach Anspruch 3 ist.

**5.** Klebeband nach Anspruch 4, **dadurch gekennzeichnet, dass** beide außenliegenden Haftklebemassen solche nach Anspruch 3 sind.

**6.** Klebeband nach Anspruch 4 oder 5, umfassend einen geschäumten Träger und zumindest einen stabilisierenden Träger auf zumindest einer Seite des geschäumten Trägers.

**7.** Klebeband nach Anspruch 6, **dadurch gekennzeichnet, dass** der stabilisierende Träger ein Papier oder eine Folie, insbesondere eine Folie aus Polyester, Polyethylenterephthalat, Polyethylen, Polypropylen, Biaxial orientiertes Polypropylen oder Poylvinylchlorid ist.

**8.** Klebeband nach einem der Ansprüche 6 oder 7, **dadurch gekennzeichnet, dass** der geschäumte Träger ein Polymerschaum, vorzugsweise bestehend aus Polyurethan, Polyvinylchlorid oder Polyolefin, besonders bevorzugt bestehend aus Polyethylen oder Polypropylen, ist.

**9.** Verwendung einer Klebemasse nach Anspruch 3 oder eines Klebebandes nach einem der Ansprüche 4 bis 8 zur Fixierung von Druckplatten, insbesondere von mehrschichtigen Photopolymer-Druckplatten auf Druckzylindern oder Druckhülsen (Sleeves).

**Claims**

**1.** Composition for preparing a crosslinked pressure-sensitive adhesive, comprising

A. a pressure-sensitive adhesive comprising

A1). 60% to 90% by weight of a polymer component based on

a) 5% to 25% by weight (based on the polymer component) of one or more compounds having at least one ethylenically unsaturated bond, the monomers being each selected such that the glass transition temperatures Tg of the corresponding homopolymers are at least 0°C, some of the compounds having at least one ethylenically unsaturated bond also having at least one carboxyl group,
b) 75% to 95% by weight (based on the polymer component) of acrylic esters and/or methacrylic esters which are each selected such that the glass transition temperatures $T_g$ of the corresponding homopolymers are not more than -20°C;

A2). 10% to 40% by weight of at least one resin component having a softening point of at least 100°C,

and
B. at least one difunctional or polyfunctional crosslinker,
the at least one crosslinker being present in an amount such that the chemical-amount ratio $V = n_Z/n_P$ of the amount $n_Z$ of the crosslinking-active centres of the crosslinker to the theoretical amount $n_P$ of the macromolecules of the polymer component A1 possesses a value between 1.5 and 2.5,
the amount $n_Z$ of the crosslinking-active centres of the crosslinker being given by the mass $m_V$ of the crosslinker, divided by the molar mass $M_V$ of the crosslinker, multiplied by the number f of the crosslinking-active centres per crosslinker molecule, i.e. $n_Z = f \cdot m_V/M_V$
and the theoretical amount $n_P$ of the macromolecules of the polymer component A1 being given by the mass $m_P$ of the polymer component in the pressure-sensitive adhesive, divided by the number average molar mass $M_{n,P}$ of this component, i.e. $n_P = m_P/M_{n,P}$.

2. Composition according to Claim 1, **characterized in that** the polymer component has a molar mass $M_{n,P}$ of between about 30 000 and about 600 000 g/mol, preferably between about 40 000 and about 400 000 g/mol, more preferably between about 50 000 and about 300 000.

3. Pressure-sensitive adhesive obtainable by crosslinking the composition according to either of the preceding claims.

4. Double-sided adhesive tape for bonding flexible printing plates, comprising at least one carrier and two external layers of pressure-sensitive adhesive, **characterized in that** at least one of the external layers of pressure-sensitive adhesive is a crosslinking pressure-sensitive adhesive according to Claim 3.

5. Adhesive tape according to Claim 4, **characterized in that** both external pressure-sensitive adhesives are adhesives according to Claim 3.

6. Adhesive tape according to Claim 4 or 5, comprising a foamed carrier and at least one stabilizing carrier on at least one side of the foamed carrier.

7. Adhesive tape according to Claim 6, **characterized in that** the stabilizing carrier is a paper or a film, more particularly a film of polyester, polyethylene terephthalate, polyethylene, polypropylene, biaxially oriented polypropylene or polyvinyl chloride.

8. Adhesive tape according to either of Claims 6 or 7, **characterized in that** the foamed carrier is a polymer foam, preferably composed of polyurethane, polyvinyl chloride or polyolefin, more preferably composed of polyethylene or polypropylene.

9. Use of an adhesive according to Claim 3 or of an adhesive tape according to any of Claims 4 to 8 for fixing printing plates, more particularly multi-layered photopolymer printing plates, to printing cylinders or printing sleeves.

**Revendications**

1. Composition pour la préparation d'une masse autoadhésive réticulée comprenant

A. une masse autoadhésive constituée par

A1). 60 à 90% en poids d'un composant polymère à base de

    a) 5 à 25% en poids (par rapport au composant polymère) d'un ou de plusieurs composés présentant au moins une liaison éthyléniquement insaturée, où les monomères sont choisis à chaque fois de manière telle que les températures de transition vitreuse $T_G$ des homopolymères correspondants sont d'au moins 0°C,
une partie des composés qui présentent au moins une liaison éthyléniquement insaturée présentant en outre au moins un groupe carboxyle,
b) 75 à 95% en poids (par rapport au composant polymère) d'esters de l'acide acrylique et/ou d'esters de l'acide méthacrylique, qui sont choisis à chaque fois de manière telle que les températures de transition vitreuse $T_G$ des homopolymères correspondants ne sont pas supérieures à -20°C ;

A2). 10 à 40% en poids d'au moins un composant de type résine présentant un point de ramollissement d'au moins 100°C,

et

B. au moins un réticulant difonctionnel ou polyfonctionnel,
où ledit au moins un réticulant est présent en une quantité telle que le rapport des quantités $V = n_z/n_P$ de la quantité $n_z$ de centres actifs en réticulation du réticulant à la quantité théorique $n_P$ de macromolécules du composant polymère A1 présente une valeur entre 1,5 et 2,5,
où la quantité $n_z$ de centres actifs en réticulation du réticulant est obtenue par la masse $m_v$ du réticulant multipliée par le nombre f de centres actifs en réticulation par molécule de réticulant, divisée par la masse molaire $M_v$ du réticulant, c'est-à-dire $n_z = f \cdot m_v/M_v$
et la quantité théorique $n_P$ des macromolécules du composant polymère A1 est obtenue par la masse $m_P$ du composant polymère dans la masse autoadhésive divisée par la masse molaire numérique moyenne $M_{n,P}$ de ce composant, c'est-à-dire $n_P = m_P/M_{n,P}$.

2. Composition selon la revendication 1, **caractérisée en ce que** le composant polymère présente une masse molaire $M_{n,P}$ entre environ 30 000 et environ 600 000 g/mole, de préférence entre environ 40 000 et environ 400 000 g/mole, de manière particulièrement préférée entre environ 50 000 et environ 300 000.

3. Masse autoadhésive, pouvant être obtenue par réticulation de la composition selon l'une quelconque des revendications précédentes.

4. Bande adhésive double face destinée au collage de plaques d'impression souples, comprenant au moins un support et deux couches de masse autoadhésive extérieures, **caractérisée en ce qu'**au moins une des couches de masse autoadhésive extérieures est une masse autoadhésive réticulée selon la revendication 3.

5. Bande adhésive selon la revendication 4, **caractérisée en ce que** les deux masses autoadhésives extérieures sont celles selon la revendication 3.

6. Bande adhésive selon la revendication 4 ou 5, comprenant un support moussé et au moins un support stabilisant sur au moins une face du support moussé.

7. Bande adhésive selon la revendication 6, **caractérisée en ce que** le support stabilisant est un papier ou une feuille, en particulier une feuille en polyester, en poly(téréphtalate d'éthylène), en polyéthylène, en polypropylène, en polypropylène orienté biaxialement ou en poly(chlorure de vinyle).

8. Bande adhésive selon l'une quelconque des revendications 6 ou 7, **caractérisée en ce que** le support moussé est une mousse de polymère, de préférence constituée de polyuréthane, de poly(chlorure de vinyle) ou de polyoléfine, de manière particulièrement préférée de polyéthylène ou de polypropylène.

9. Utilisation d'une masse adhésive selon la revendication 3 ou d'une bande adhésive selon l'une quelconque des revendications 4 à 8 pour la fixation de plaques d'impression, en particulier de plaques d'impression en photopolymère à plusieurs couches sur des cylindres d'impression ou des manchons d'impression (Sleeves).

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4380956 A
- GB 1533431 A
- US 4574697 A
- EP 0206760 A
- US 4574712 A
- US 3983287 A
- US 5613942 A
- US 5476712 A
- EP 1590383 A
- DE 4340297 A1

**In der Beschreibung aufgeführte Nicht-Patentliteratur**

- **T.G. Fox.** *Bull. Am. Phys. Soc.,* 1956, vol. 1, 123
- **Houben Weyl.** *Methoden der Organischen Chemie,* vol. E 19a, 60-147
- Journal of Polymer Science, Polymer Chemistry. 1976, vol. 14, 1495-1511